# EUROPÄISCHE PATENTSCHRIFT

(11) **EP 1 249 066 B1**
(45) Veröffentlichungstag und Bekanntmachung des Hinweises auf die Patenterteilung: **05.12.2012**
(21) Anmeldenummer: 01971838.6
(22) Anmeldetag: 01.08.2001
(51) Int. Cl.: H02M 3/155

(54) **Elektrogerät mit einem Elektromotor und einem Drosselwandler**
Electric device comprising an electric motor and an inductor based converter
Appareil électrique comportant un motoeur électrique et un convertisseur à inductance

(30) Priorität: 14.08.2000 DE 10040275
(43) Veröffentlichungstag der Anmeldung: 16.10.2002
(73) Patentinhaber: Braun GmbH, 61476 Kronberg (DE)
(72) Erfinder: FREUND, Dirk, 65779 Kelkheim (DE); GIERSIEPEN, Martin, 61440 Oberursel (DE); HARTTMANN, Brigitte, 65527 Niedernhausen (DE); HECK, Ulrich, 61440 Oberursel (DE); HOLLINGER, Stefan, 61476 Kronberg (DE); KRESSMANN, Frank, 65760 Eschborn (DE); RÖNNEBERG, Gerrit, 64289 Darmstadt (DE); SCHNAK, Fred, 61476 Kronberg (DE); WUNDER, Dieter, 63679 Schotten (DE)
(86) Internationale Anmeldenummer: PCT/EP2001/008888
(87) Internationale Veröffentlichungsnummer: WO 2002/015374

(56) Entgegenhaltungen:
- DE-A1- 4 335 522
- FR-A- 2 743 220
- US-A- 5 377 094
- US-A- 6 069 810

## Beschreibung

Die Erfindung betrifft ein Elektrogerät mit einem Drosselwandler und einem Elektromotor. Ein Drosselwandler weist bekanntermaßen eine Diode, eine Drossel und einen elektronischen Schalter auf, der den durch die Drossel fließenden Strom ein- und ausschaltet. Die Ausgangsspannung des Drosselwandlers kann größer oder kleiner sein als eine Versorgungsspannung, die beispielsweise von einer Batterie oder einem Netzteil bereitgestellt wird.

Es sind Elektrogeräte bekannt, bei denen durch einen Drosselwandler aus einer Versorgungsspannung eine Gleichspannung erzeugt wird, die zum Betrieb eines Elektromotors verwendet wird. Diese Geräte können zusätzlich eine elektronische Schaltung enthalten, die ebenfalls vom Drosselwandler versorgt wird.

Es sind ferner Elektrogeräte mit einem Elektromotor bekannt, der durch eine elektronische Schaltung mit beispielsweise einem Pulsweitenmodulator und einem elektronischen Schalter in seiner Drehzahl regelbar bzw. ein- und ausschaltbar ist. Insbesondere bei batteriebetriebienen Elektrogeräten dieser Art kann beim Einschalten des Elektromotors die Versorgungsspannung zumindest kurzzeitig so weit absinken, daß die elektronische Schaltung nicht mehr richtig arbeitet, d.h. beispielsweise ein Mikrokontroller zurückgesetzt wird.

Aus der DE 42 37 843 ist eine Schaltungsanordnung zum Betreiben einer induktiven Last bekannt, die wenigstens eine erste und eine zweite Teilwicklung umfaßt. Die Schaltungsanordnung enthält eine Steueranordnung und wird an einer Gleichspannungsquelle betrieben, deren Spannung zum Betrieb der Steueranordnung nicht ausreicht. Die Teilwicklungen der induktiven Last werden als Spartransformator benutzt, um so eine zum Betrieb der Steueranordnung ausreichende höhere Spannung zu erzeugen.

In der US 6,069,810 ist eine Stromversorgungsschaltung für einen Motor beschrieben, die einen Drosselwandler aufweist, wobei wenigstens eine Motorwicklung als Induktivität für den Drosselwandler verwendet wird.

In der US 5,377,094 wird die Freilaufenergie eines Elektromotors benutzt, um eine Hilfsausgangsspannung zu erzeugen, die höher als die Speisespannung des Elektromotors ist.

Es ist Aufgabe der vorliegenden Erfindung, ein Elektrogerät mit einem

Elektromotor und einem Drosselwandler anzugeben, das auch bei schwankender Versorgungsspannung zuverlässig funktioniert,

Die Lösung dieser Aufgabe gelingt besonders einfach, wenn das Elektrogerät eine Schaltungsanordnung mit den Merkmalen des Anspruchs 1 aufweist. Bei einem erfindungsgemäßen Elektrogerät versorgt der Drosselwandler eine elektronische. Steuerschaltung zur Drehzahlregulierung aber nicht den Elektromotor.

Die erfindungsgemäße Schaltungsanordnung hat dann den besonderen Vorteil, daß sie nur sehr wenige Bauteile benötigt, um einerseits eine Drehzahlregulierung für den Elektromotor und andererseits einen Drosselwandler zur Stabilisierung der Versorgungsspannung für eine elektronische Schaltung zu realisieren. Erfindungsgemäß wird nämlich nicht nur der Elektromotor als Drossel für den Drosselwandler sondern auch der für die Drehzahlregulierung verwendete elektronische Schalter wird als Schalter für den Drossetwandter benutzt. Damit der Drosselwandler auch bei Stillstand des Elektromotors arbeiten kann, muß der Elektromotor auch dann noch von einem vom elektronischen Schalter zerhackten Mindeststrom durchfossen sein, d.h. die vom Elektromotor anzutreibende Last muß so groß sein, daß der Elektromotor bei diesem Mindeststrom stehenbleibt. Andererseits darf der Elektromotor nie mit voller Leistung, d.h. nicht zerhacktem Strom, betrieben werden, da sonst der Drosselwandler ebenfalls nicht mehr arbeitet. Das für ein zufriedenstellendes Arbeiten des Elektrogeräts zulässige Puls-Pausen-Verhältnis des zerhackten Stroms hängt von der Größe des Elektromotors, der Größe eines vom Drosselwandler aufgeladenen Speicherkondensators und vom Stromverbrauch der vom Speicherkondensator versorgten elektronischen Schaltung ab. Das Puls-Pausen-Verhältnis kann im Bereich von beispielsweise 0,01 bis 100 liegen, bei Elektrokleingeräten eher im Bereich von 0,05 bis 20 oder von 0,1 bis 10.

Die Erfindung wird nachstehend anhand zweier Ausführungsbeispiele für Schaltungsanordnungen erläutert, die in den Zeichnungen dargestellt sind. Weitere Ausgestaltungen sind in der Beschreibung beschrieben. Es zeigt:
- Fig. 1: ein erstes Ausführungsbeispiel einer erfindungsgemäßen Schaltung;
- Fig. 2: ein zweites Ausführungsbeispiel einer erfindungsgemäßen Schaltung.

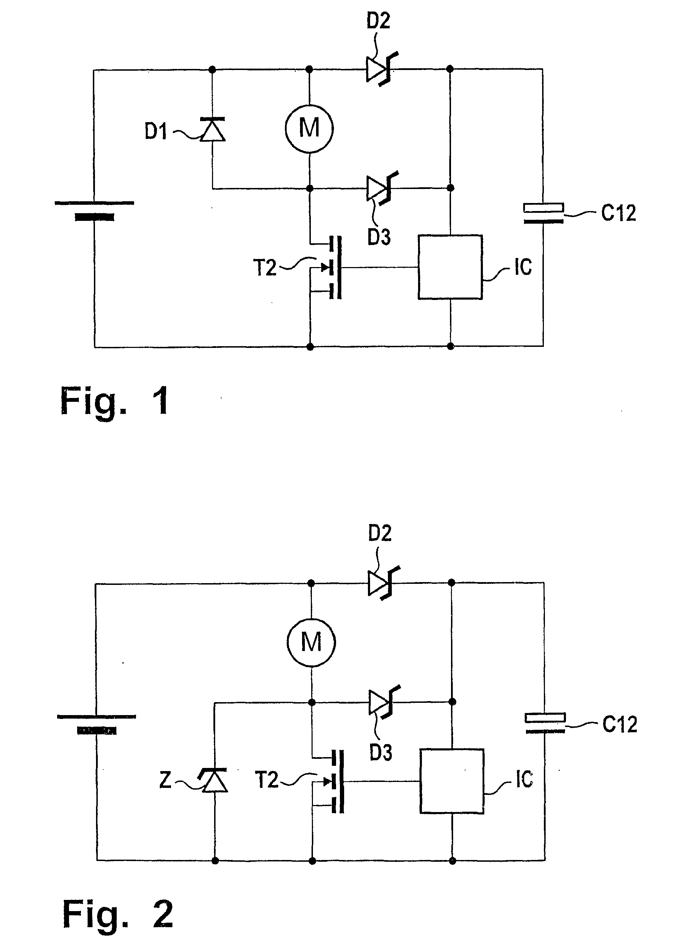

Die in Fig. 1 dargestellte erfindungsgemäße Schaltungsanordnung enthält eine Steuerschaltung, beispielsweise einen Mikrokontroller IC, durch die ein steuerbarer Schalter ansteuerbar ist. Der steuerbare Schalter besteht aus einem Transistor T2, der in Reihe mit einem Elektromotor M an den Klemmen einer Batterie liegt. Statt einer Batterie kann aber auch ein Netzteil als Versorgungsspannungsquelle dienen. Parallel zum Elektromotor M liegt eine erste Diode D1, die bezogen auf die Batteriespannung in Sperrichtung geschaltet ist, und als Freilaufdiode wirkt. Ein Speicherkondensator C12 ist mit seinem einen Anschluß mit der einen Batterieklemme und mit seinem anderen Anschluß mit den Kathoden zweier Dioden D3, D2 verbunden. Die Anode der zweiten Diode D2 ist mit der anderen Batterieklemme, und die Anode der dritten Diode D3 ist mit dem Verbindungspunkt zwischen dem Motor M und dem Transistor T2 verbunden. Die zweite und dritte Diode D2, D3 sind beispielsweise Schottky-Dioden, deren Durchlaßspannung kleiner ist als die Durchlaßspannung der ersten Diode D1. Der Mikrokontroller IC liegt mit seinen Versorgungsspannungsanschlüssen parallel zum Speicherkondensator C12.

Die Arbeitsweise der erfindungsgemäßen Schaltungsanordnung wird nachfolgend beschrieben, wobei zunächst so getan wird, als wenn die dritte Diode D3 nicht vorhanden wäre. Der Mikrokontroller IC enthält beispielsweise einen Pulsweitenmodulator, der den Transistor T2 ansteuert, d.h. ein- und ausschaltet. Daher fließt durch den Elektromotor M ein zerhackter Gleichstrom, wobei die Drehzahl bzw. das Drehmoment des Elektromotors M vom Puls-Pausen-Verhältnis des zerhackten Gleichstroms und der mechanischen Belastung des Elektromotors M abhängt. Bei jedem Ausschalten des Transistors T2 entsteht am Elektromotor M eine Induktionsspannung, die über die erste Diode D1 kurzgeschlossen wird, sofern sie größer ist als die Durchlaßspannung der ersten Diode D1. Die erste Diode D1 ist vorzugsweise eine Siliziumdiode mit einer Durchlaßspannung von 0,65 V. Die Batterie lädt über die zweite Diode D2 den Speicherkondensator C12 auf. Die zweite Diode D2 ist vorzugsweise eine Schottky-Diode, deren Durchlaßspannung beispielsweise 0,2 V beträgt. Daher ist die Versorgungsspannung des Mikrokontrollers IC stets um 0,2 V kleiner als die Batteriespannung. Bei großer mechanischer Belastung des Elektromotors kann die Batteriespannung und damit auch die Versorgungsspannung des Mikrokontrollers IC so weit absinken, daß der Mikrokontroller IC einen Reset durchführt.

Berücksichtigt man jetzt das Vorhandensein der dritten Diode D3, so erkennt man, daß die erfindungsgemäße Schaltungsanordnung einen Drosselwandler enthält, der aus dem Mikrokontroller IC, dem Transistor T2, dem Elektromotor M, der dritten Diode D3 und dem Speicherkondensator C12 besteht. Die dritte Diode D3 ist vorzugsweise eine Schottky-Diode, deren Durchlaßspannung beispielsweise 0,2 V beträgt. Der Drosselwandler ist allerdings nur dann in Betrieb, wenn das Puls-Pausen-Verhältnis weder Null noch unendlich ist. Der Drosselwandler nutzt in an sich bekannter Weise die beim Ausschalten des Motorstroms auftretende Induktionsspannung, um über die dritte Diode D3 den Speicherkondensator C12 auf eine Spannung aufzuladen, die maximal um die Differenz der Durchlaßspannungen der ersten und dritten Diode größer ist als die Batteriespannung. Beim oben beschriebenen Ausführungsbeispiel ist somit die Versorgungsspannung des Mikrokontrollers IC bis zu 0,45 V größer als die Batteriespannung.

Die in Figur 2 dargestellte zweite erfindungsgemäße Schaltungsanordnung unterscheidet sich von der Schaltungsanordnung gemäß Figur 1 lediglich darin, daß statt der Freilaufdiode D1 eine Zenerdiode Z vorhanden ist, die bezogen auf die Batteriespannung in Sperrichtung parallel zur Hauptstromstrecke des Transistors T2 geschaltet ist. Dies hat den Vorteil, daß die vom Drosselwandler erzeugte Versorgungsspannung wesentlich größer sein kann als die Batteriespannung, da die Spannungsdifferenz zwischen der Versorgungsspannung und der Batteriespannung nicht mehr auf die Differenz der Durchlaßspannungen der ersten und dritten Diode begrenzt ist.

Damit der Drosselwandler möglichst immer in Betrieb sein kann, ist die Leistung des Elektromotors M so an die von ihm anzutreibene Last angepaßt, daß beispielsweise selbst bei einem Puls-Pausen-Verhältnis von 0,05 - 0,1 der Elektromotor sich noch nicht drehen kann, d.h. der Elektromotor zwar mechanisch ausgeschaltet ist, aber elektrisch bereits oder immer noch als Drossel wirkt. Andererseits wird der Elektromotor M selbst bei "Vollast" lediglich mit einem Puls-Pausen-Verhältnis von beispielsweise 10 - 20 betrieben.

Wenn der Speicherkondensator C12 vom Drosselwandler oder einem in den Figuren nicht dargestellten Netzteil auf eine über der Batteriespannung liegende Spannung aufgeladen wurde, können auch die beiden ungünstigsten Betriebszustände überbrückt werden, ohne daß der Mikrokontroller IC einen Reset durchführt, nämlich das "mechanische" Ein- und Ausschalten des Elektromotors M. Beim Einschalten, d.h. wenn sich das Puls-Pausen-Verhältnis abrupt von einem kleinen Wert auf einen großen Wert ändert, kann aufgrund der großen Stromaufnahme des anlaufenden Elektromotors M die Batteriespannung absinken. Beim Ausschalten, d.h. wenn sich das Puls-Pausen-Verhältnis abrupt von einem großen Wert auf einen kleinen Wert verringert, kann die Induktionsspannung des Elektromotors M so groß sein, daß die Spannung an der Anode der dritten Diode D3 kleiner ist als die Spannung an der Anode der zweiten Diode D2. Da aber im letztgenannten Fall die Spannung der nun nicht mehr belasteten Batterie ansteigt, reicht es aus, wenn die Versorgungsspannung des Mikrokontrollers IC von der Batterie über die zweite Diode D2 aufrecht erhalten wird.

Bei beiden Schaltungsanordnungen kann die zweite Diode D2 auch fehlen, und/oder die Spannung am Kondensator C12 über das Puls-Pausen-Verhältnis geregelt werden.

Bei besonders vorteilhaften Ausführungen für erfindungsgemäße Elektrogeräte bzw. Schaltungsanordnungen ist die Batterie wiederaufladbar, und kann beispielsweise über ein Netzteil geladen werden, das parallel zur Batterie geschaltet ist. Der Ladevorgang kann in an sich bekannter Weise durch einen elektronischen Schalter gesteuert oder geregelt sein, der mit dem Netzteil und der Batterie in Reihe geschaltet ist, und von einer Steuer- oder Regelschaltung, insbesondere dem Mikrokontroller IC, angesteuert wird. Der Kondensator C12 kann ebenfalls vom Netzteil über die zweite Diode D2 geladen werden.

## Patentansprüche

1. Elektrogerät mit einem Elektromotor (M), einer Steuerschaltung (IC) zur Drehzahlregulierung des Elektromotors (M) und einem Drosselwandler (M, T2, D3, C12), der dazu eingerichtet ist, eine Versorgungsspannung zu erzeugen, die höher als die Speisespannung des Elektrogeräts ist, wobei der Elektromotor als Drossel des Drosselwandlers dient und die Steuerschaltung (IC) vom Drosselwandler (M, T2, D3, C12) mit der erzeugten Versorgungspannung versorgt wird.

2. Elektrogerät nach Anspruch 1,
**dadurch gekennzeichnet,**
**daß** der Drosselwandler einen elektronischen Schalter (T2) aufweist, der in Reihe mit dem Elektromotor (M) geschaltet ist.

3. Elektrogerät nach Anspruch 2,
**dadurch gekennzeichnet,**
**daß** der elektronische Schalter (T2) durch die Steuerschaltung (IC) ansteuerbar ist.

4. Elektrogerät nach Anspruch 3,
**dadurch gekennzeichnet,**
**daß** durch die Steuerschaltung (IC) der elektronische Schalter (T2) ein- und ausschattbar ist, wobei das Verhältnis zwischen der Einschaltdauer und der Ausschaltdauer im Bereich von 0.05 und 20 liegt.

## Claims

1. An electrical apparatus with an electric motor (M), a control circuit (IC) for regulating the rotational speed of the electric motor (M), and an inductor-based converter (M, T2, D3, C12) which is designed to produce a supply voltage that is higher than the feeding voltage of the electrical apparatus, wherein the electric motor serves as the choke for the inductor-based converter, and the control circuit (IC) is supplied with the generated supply voltage by the inductor-based converter (M, T2, D3, C12).

2. The electrical apparatus according to Claim 1;
**characterized in that**
the inductor-based converter has an electronic switch (T2) which is connected in series with the electric motor (M).

3. The electrical apparatus according to claim 2;
**characterized in that**
the electronic switch (T2) is controllable by the control circuit (IC).

4. The electrical apparatus according to claim 3;
**characterized in that**
the electronic switch (T2) can be switched on and off by the control circuit (IC), wherein the ratio between the on-time and the off-time is in the range of 0.05 to 20.

## Revendications

1. Appareil électrique équipé d'un moteur électrique (M), d'un circuit de commande (IC) pour la régulation de la vitesse du moteur électrique (M) et d'un convertisseur à inductance (M, T2, D3, C12), configuré pour produire une tension d'alimentation, qui est supérieure à la tension d'entrée de l'appareil électrique, dans lequel le moteur électrique sert d'inductance du convertisseur à inductance et le circuit de commande (IC) est alimenté par le convertisseur à inductance (M, T2, D3, C12) avec la tension d'alimentation produite.

2. Appareil électrique selon la revendication 1,
**caractérisé en ce que**
le convertisseur à inductance comporte un interrupteur électronique (T2), qui est connecté en série avec le moteur électrique (M).

3. Appareil électrique selon la revendication 2,
**caractérisé en ce que**
l'interrupteur électronique (T2) peut être commandé par le circuit de commande (IC).

4. Appareil électrique selon la revendication 3,
**caractérisé en ce que**
l'interrupteur électronique (T2) peut être allumé et éteint par le circuit de commande (IC), dans lequel le rapport entre le temps de fonctionnement et le temps de repos se trouve dans la plage comprise entre 0,05 et 20.
